(19) Europäisches Patentamt
European Patent Office
Office européen des brevets

(11) EP 0 725 306 A1

(12) # EUROPÄISCHE PATENTANMELDUNG

(43) Veröffentlichungstag:
**07.08.1996 Patentblatt 1996/32**

(51) Int. Cl.$^6$: **G02F 1/35**, C08F 291/00

(21) Anmeldenummer: **96100828.1**

(22) Anmeldetag: **22.01.1996**

(84) Benannte Vertragsstaaten:
**BE CH DE FR GB IT LI NL SE**

(30) Priorität: **02.02.1995 DE 19503282**

(71) Anmelder: **BAYER AG**
**51368 Leverkusen (DE)**

(72) Erfinder: **Ostoja Starzewski, Karl-Heinz A., Dr.**
**D-61118 Bad Vilbel (DE)**

(54) **Verwendung von Matrixpolyacetylenen für nicht-lineare optische Elemente**

(57) Matrixpolyacetylene eignen sich aufgrund ihrer chi$^{(3)}$-Eigenschaften hervorragend zur Herstellung von NLO-Bauelementen.

EP 0 725 306 A1

## Beschreibung

Gegenstand der Erfindung ist die Verwendung von Matrixpolyacetylenen in Bauelementen, bei deren Funktion die nicht-linear optischen Eigenschaften dieser Matrixpolyacetylene zum Tragen kommen.

Nicht-lineare Optik (NLO) nutzt die Eigenschaft von Materialien, oberhalb einer spezifischen Feldstärke eine Polarisation zu zeigen, die von der linearen Beziehung $P = \varepsilon_0 \cdot chi^{(1)} \cdot E$ (mit $\varepsilon_0$ = absolute Dielektrizitätszahl, chi = dielektrische Suszeptibilität und E = elektrische Feldstärke) abweicht. Die Polarisation kann dann durch die nicht-lineare Funktion

$$P = \varepsilon_0( \cdot chi^{(1)} \cdot E + chi^{(2)} \cdot E^2 + chi^{(3)} \cdot E^3 + ...)$$

ausgedrückt werden, worin $chi^{(1)}$ die dielektrische Suszeptibilität erster Ordnung, $chi^{(2)}$ die dielektrische Suszeptibilität zweiter Ordnung und $chi^{(3)}$ die dielektrische Suszeptibilität dritter Ordnung bedeuten. Die nicht-linearen dielektrischen Suszeptibilitäten $chi^{(2)}$ und $chi^{(3)}$ beschreiben die NLO-Eigenschaften eines Materials, welche unter dem Einfluß hoher Lichtintensitäten zum Tragen kommen.

Materialien mit einer dielektrischen Suszeptibilität $chi^{(3)}$ besitzen u.a. einen intensitätsabhängigen Brechnungsindex; sie eignen sich daher prinzipiell als Bauelemente für opto-optische Schalter, in denen Licht durch Licht geschaltet wird. Durch die zunehmende Verfügbarkeit preiswerter Laserlichtquellen ist dieses physikalische Phänomen besonders interessant geworden.

Mit $chi^{(3)}$-Materialien läßt sich die Frequenz von Laserlicht verdreifachen (THG = Third Harmonic Generation). Dies ist besonders für das "optical computing" von Bedeutung, etwa um in einem write-store-read-erase-Zyklus mit einem Rotlicht-Laser zu lesen und wahlweise mit (durch ein NLO-Bauteil) erhöhter Frequenz im UV-Bereich Informationen zu schreiben.

Die Anforderungen an $chi^{(3)}$-NLO-Materialien, die sich für den Einsatz in der Praxis eignen, umfassen hohe $chi^{(3)}$-Werte (vorzugsweise größer als $10^{-13}$esu), kurze Relaxationszeiten (d.h. kurze Schaltzeiten) im Bereich von Femtosekunden, geringe Verluste durch Absorption bzw. Streuung und eine gute Verarbeitbarkeit.

Traditionelle NLO-Materialien sind 1. anorganische Einkristalle, z.B. von Lithiumniobat und 2. organische Kristalle. Weitere Entwicklungen betreffen 3. Guest-Host-Systeme, wobei die NLO-aktiven Moleküle in einer Matrix eingebettet sind, 4. Polymere mit NLO-aktiven funktionellen Gruppen, die über eine Abstandshaltergruppe ("Spacer") an das Polymer-Rückgrat ("backbone") angebunden sind und 5. konjugierte Polymere.

Wir haben nun gefunden, daß Matrixpolyacetylene gute NLO-Eigenschaften bei guter Lagerstabilität, selbst bei erhöhter Temperatur, besitzen. Unter "Matrixpolyacetylenen" im Sinne der Erfindung werden Polyacetylene verstanden, die durch Acetylen-Polymerisation in Gegenwart anderer Polymere hergestellt worden sind; vgl. EP-A 374 627,384 248 und EP-PS 210 498.

Um die erfindungsgemäß zu verwendenden Matrixpolyacetylene für noch höhere Temperaturen gegen Sauerstoffangriff zu stabilisieren, können sie durch eine Silicium-Sauerstoff-haltige Oberflächenbeschichtung geschützt werden. Bevorzugte Beschichtungsmittel dieser Art können Mittel auf Silikatbasis (vorzugsweise auf Basis von Natrium- oder Kaliumsilikaten, sogenannten Natron- oder Kaliwassergläser) sein, die aus wäßriger Lösung aufgebracht werden können. Auch $SiO_x$-Schichten (x = 1 bis 2, vorzugsweise 1,1 bis 1,9) sind hierfür geeignet. Sie können mittels Gasphasenverfahren aufgebracht werden. Hierfür geeignete Gasphasenverfahren sind z.B. PVD ( = physical vapour deposition), Plasma-CVD (= plasma chemical vapour deposition) und Sputtering.

Polyacetylen kann dabei in einer Polymerlösung, in oder auf einem gequollenen Polymer erzeugt werden. Vorzugsweise wird Acetylen in einer Polymerlösung polymerisiert.

Geeignete "andere" Polymere umfassen z.B. Polystyrol, Polycarbonat, Polyvinylchlorid, Polychloropren, Polyether, Polyacrylnitril, Polyvinylpyrrolidon, Polyisopren, Polyvinylalkohol, Cellulose-Derivate, z.B. Methylcellulose und Mischpolymerisate wie Acrylnitril/Styrol-Copolymerisate, Butadien/Acrylnitril-Copolymerisate, die hydriert sein können, und Acrylnitril/(Meth-)Acrylat-Copolymerisate. Lösliche Polymere sind bevorzugt.

Besonders bevorzugt sind Polymere mit polaren Gruppen, beispielsweise Halogenatomen, Nitrilgruppen, Hydroxylgruppen oder Carbonestergruppen, z.B. Polyvinylchlorid, Polyvinylalkohol, Polyacrylnitril und Acrylnitril enthaltende Copolymerisate sowie Polyvinylpyrrolidon und Polyvinylcarbazol.

Unter den Polymeren mit polaren Gruppen haben sich die Polyvinylalkohole als besonders geeignet erwiesen, insbesondere Polyvinylacetate mit einem Verseifungsgrad von mindestens 70, vorzugsweise mindestens 90 und insbesondere mindestens 95 %. Sie besitzen in 4 gew.- %iger wäßriger Lösung bei 20°C im allgemeinen Viskositäten von ca. 2 bis 70, vorzugsweise von 10 bis 50 mPa.s. Der Begriff "Polyvinylalkohole" umfaßt auch Vinylalkohol-Copolymerisate, die bis zu 20, vorzugsweise bis zu 10 Gew.-% copolymerisierte Einheiten von Ethylen enthalten.

Weitere bevorzugte Polymere mit polaren Gruppen sind Polyacrylnitrile, d.h. Polymerisate enthaltend 85 bis 100 Gew.-% Einheiten von eingebautem Acrylnitril und 15 bis 0 Gew.-% Einheiten von copolymerisierten ethylenisch ungesättigten Monomeren; bevorzugte ethylenisch ungesättigte Monomere sind Acrylsäure-$C_1$-$C_6$-alkylester wie

Methylacrylat und $C_2$-$C_6$-Monocarbonsäure-$C_2$-$C_4$-alkenylester wie Vinylacetat. Bevorzugte Polyacrylnitrile besitzen Staudinger-Indices von 0,5 bis 8, insbesondere 1 bis 4 dl/g, gemessen in Dimethylformamid.

Weitere bevorzugte Polymere mit polaren Grippen sind Polyvinylpyrrolidone mit als Gewichtsmittel bestimmten Molekulargewichten von 2 000 bis 800 000, vorzugsweise 5 000 bis 500 000.

Insbesondere für die polaren Polymeren geeignete Lösungsmittel umfassen Dimethylformamid, Diethylformamid, Dimethylacetamid, Dimethylsulfoxid sowie cyclische N-alkylierte Säureamide (Lactame) und cyclische N.N-dialkylierte Harnstoffe mit 5 bis 7 Ringgliedern, wobei die Alkylgruppen vorzugsweise solche mit 1 bis 4 C-Atomen wie Methyl und Ethyl sind.

Beispiele für solche Lösungsmittel sind N-Methyl-pyrrolidon (NMP), N-Ethylpyrrolidon, N-Propyl-pyrrolidon, N-Butyl-pyrrolidon, N-Methyl-piperidin-2-on, N-Methyl-caprolactam (NMC), N,N'-Dimethyl-imidazolin-2-on, N,N'-Trimethylen-N,N'-dimethyl-harnstoff, N,N'-Tetramethylen-N,N'-dimethyl-harnstoff u.a. Solche Lösungsmittel können einzeln oder als Gemisch mehrerer von ihnen eingesetzt werden.

Geeignete Polymerisationskatalysatoren sind beispielsweise in den EP-A 137 389, 374 627, 384 248 und in der EP-PS 210 498 beschrieben, deren Offenbarungsgehalte Teil dieser Beschreibung sein sollen.

Bevorzugte Polymerisationskatalysatoren enthalten die Struktureinheit

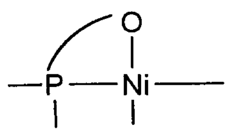

Sie sind beispielsweise erhältlich 1. durch Umsetzung einer Nickel-(O)-Verbindung oder einer Verbindung, die in situ in eine Nickel-(O)-Verbindung überführt werden kann, mit Verbindungen der Formeln (I) und (II)

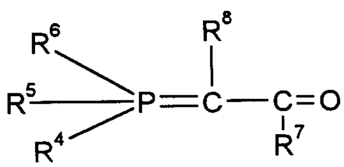

und

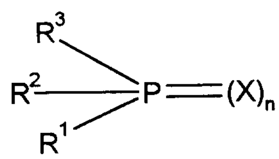

(I) (II)

worin

$R^1$, $R^2$ und $R^3$ unabhängig voneinander gegebenenfalls durch Halogen, Hydroxy, $C_1$-$C_{20}$-Alkoxy oder $C_6$-$C_{12}$-Aryloxy, substituiertes $C_1$-$C_{20}$-Alkyl, $C_6$-$C_{12}$-Aryl oder $C_3$-$C_8$-Cycloalkyl, ferner $C_6$-$C_{12}$-Aryl-$C_1$-$C_{20}$-alkyl, $C_1$-$c_{20}$-Alkyl-$C_6$-$C_{12}$-aryl, $C_1$-$C_{20}$-Alkyl-$C_3$-$C_8$-cycloalkyl, $C_6$-$C_{12}$-Aryl-$C_3$-$C_8$-cycloalkyl, $C_2$-$C_6$-Alkenyl, $C_6$-$C_{12}$-Aryl-$C_2$-$C_6$-alkenyl, Di-$C_1$-$C_4$-alkylamino und gegebenenfalls substituiertes Phenoxy oder Alkoxy,

X O, $NR^9$ oder

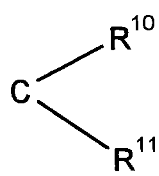

n — Null oder 1,

$R^4$, $R^5$, $R^6$, $R^7$ und $R^8$ — unabhängig voneinander, gegebenenfalls durch Halogen, Hydroxy, $C_1$-$C_{20}$-Alkoxy, $C_6$-$C_{12}$-Aryloxy oder Sulfonat-substituiertes $C_1$-$C_{20}$-Alkyl, $C_6$-$C_{12}$-Aryl, $C_2$-$C_{30}$-Alkenyl oder $C_3$-$C_8$-Cycloalkyl, ferner $C_6$-$C_{12}$-Aryl-$C_1$-$C_{20}$-alkyl, $C_1$-$C_{20}$-Alkyl-$C_6$-$C_{12}$-aryl, Halogen, Hydroxy, $C_1$-$C_{20}$-Alkoxy oder $C_6$-$C_{12}$-Aryloxy, außerdem

$R^7$ — Wasserstoff,

$R^8$ — Wasserstoff oder Sulfonat und

$R^9$, $R^{10}$ und $R^{11}$ — unabhängig voneinander Wasserstoff, Silyl, Nitrophenyl, Halogen, Cyano oder $R^1$ bedeuten,

oder 2. durch Umsetzung einer Nickel(0)-Verbindung oder einer Verbindung, die in situ in eine Nickel(0)-Verbindung übeführt werden kann, mit (anstelle von I)

(i) einem Addukt oder einem Gemisch aus Maleinsäureanhydrid, einer Verbindung der Formel (II) mit n = 0 und

(ii) einer Verbindung der Formel (II) mit n = 0 oder 1, worin $R^1$, $R^2$ und $R^3$ die vorstehend genannten Bedeutungen besitzen (vgl. EP-PS 193 047),

oder 3. durch Umsetzung einer Nickel(0)-Verbindung oder einer Verbindung, die in situ in eine Nickel(0)-Verbindung übeführt werden kann, mit (anstelle von I)

(i) einem Addukt oder einem Gemisch aus einer chinoiden Verbindung und einem tertiären Phosphin der Formel II mit n = 0 und

(ii) einer Verbindung der Formel II mit n = 0 oder 1, worin $R^1$, $R^2$ und $R^3$ die vorstehend genannten Bedeutungen besitzen (vgl. EP-PS 137 389).

Bevorzugte Reste $R^1$, $R^2$ und $R^3$ sind $C_1$-$C_6$-Alkyl, Cyclohexyl, Phenyl, Tolyl, Benzyl, Di-$C_1$-$C_4$-alkylamino, Phenoxy und $C_1$-$C_4$-Alkoxy.

$R^4$ ist vorzugsweise $C_6$-$C_{12}$-Aryl.

$R^5$, $R^6$, $R^7$ und $R^8$ sind vorzugsweise Cyclohexyl, Phenyl, Tolyl, Benzyl, Vinyl und $C_1$-$C_4$-Alkyl.

$R^7$ ist darüber hinaus bevorzugt Wasserstoff oder $C_1$-$C_4$-Alkoxy, $R^8$ darüber hinaus bevorzugt Wasserstoff oder Sulfonat.

$R^9$, $R^{10}$ und $R^{11}$ sind vorzugsweise Wasserstoff, $C_1$-$C_6$-Alkyl, Phenyl, Chlorphenyl, Nitrophenyl, $C_1$-$C_6$-Alkylphenyl, Trimethylsilyl, Chlor, Cyano, $C_2$-$C_6$-Alkenyl und Phenyl-$C_2$-$C_6$-alkenyl.

Die Nickel-Verbindungen stehen nach den vorliegenden Erkenntnissen mit der Formel (III)

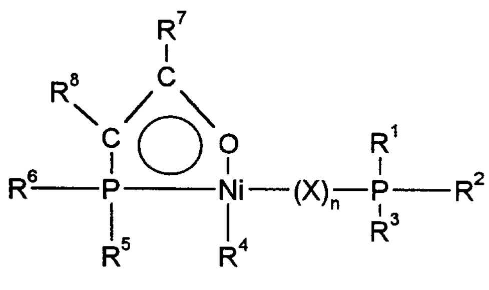

(III)

worin X, n und $R^1$ bis $R^8$ die vorstehend genannten Bedeutungen besitzen bzw. im Falle des Maleinsäureanhydridadduktes X, n und $R^1$ bis $R^6$ die vorstehend genannten Bedeutungen besitzen und $R^7$ und $R^8$ zusammen den Rest - O-CO-$CH_2$ - bedeuten, in Einklang.

Bevorzugt werden pro Mol Nickel(0)-Verbindung 1 - 4 Mole der Verbindung der Formel (I) und 1 - 4 Mole der Verbindung der Formel (II) eingesetzt, besonders bevorzugt pro Mol der Nickel(0)-Verbindung 1 Mol der Verbindung der Formel (I) und 1 Mol der Verbindung der Formel (II).

Die Umsetzungstemperatur beträgt 0 - 100 °C, insbesondere 20 - 70 °C.

Die Reaktion wird unter Ausschluß von Sauerstoff, vorzugsweise in einem Lösungsmittel, das gegenüber den Reaktanden inert ist, wie Benzol, Toluol, Cyclohexan und n-Hexan, durchgeführt.

Nach Beendigung der Reaktion wird der Katalysator als Feststoff gewöhnlich durch Filtration isoliert, wobei man nach Bedarf die Lösung zuvor einengt und/oder abkühlt. Er kann aber auch ohne Isolierung direkt zur Polymerisation von Acetylen eingesetzt werden.

Nickel(0)-Verbindungen sind beispielsweise Ni(cyclooctadien)$_2$ und Ni(allyl)$_2$.

Nickelverbindungen, die in situ in Nickel(0)-Verbindungen überführt werden können, umfassen beispielsweise Ni-acetylacetonat, Ni-octanoat und Ni-stearat, die mit Hilfe von üblichen Reduktionsmitteln wie Boranat, Alanat, Aluminiumalkylen oder Lithiumorganylen reduziert werden können.

Die Menge der verwendeten Nickel-Verbindung ist nicht kritisch. Typische Katalysatorkonzentrationen liegen zwischen 10 und $10^{-6}$, vorzugsweise zwischen $10^{-2}$ und $10^{-4}$ Mol pro Liter. Die Menge an Katalysator, bezogen auf Acetylen, liegt im allgemeinen im Bereich von 0,1 bis 50, vorzugsweise 0,5 bis 5 Gew.-%.

Die Polymerisation kann sowohl kontinuierlich als auch diskontinierlich durchgeführt werden.

Die Polymerisationstemperatur beträgt bevorzugt -20 bis +120 °C, insbesondere 0 bis 100 °C, wobei bei tiefen Temperaturen eine Aktivierung des Katalysators durch aluminiumorganische Verbindungen, beispielsweise durch Alkoxyaluminiumdialkyl, Aluminoxane oder Aluminiumtrialkyl zu empfehlen ist.

Die Polymerisation kann bei Normaldruck durchgeführt werden; jedoch ist auch das Polymerisieren unter Druck möglich. Das Acetylen kann ohne weitere Reinigung aus der Drückflasche entnommen und verwendet werden. Bei acetonempfindlichen Katalysatoren empfiehlt es sich, im Acetylen etwa enthaltenes Aceton zuvor in einer Kühlfalle auszufrieren.

Die erfindungsgemäß zu verwendenden Matrixpolyacetylene zeigen makroskopisch entweder eine heterogene oder eine homogene Polyacetylenverteilung in der Polymermatrix. Die heterogene Verteilung äußert sich durch diskrete schwarze Teilchen von Polyacetylen in der Polymermatrix, allerdings in hochdisperser Verteilung. Die homogene Verteilung äußert sich durch eine durchgehend gelb-braune, rote bis tiefblaue Färbung des Polymerproduktes.

Die Matrixpolyacetylene lassen sich in üblicher Weise zu Formkörpern, beispielsweise Fäden oder Folien verarbeiten.

Die NLO-Eigenschaften ändern sich auch bei längerer Lagerung nicht.

Die chi$^{(3)}$-Werte können beispielsweise durch die "Vier-Wellen-Mischinethode" (Degenerate Four Wave Mixing, DFWM) oder durch Frequenzverdreifachung (Third Harmonic Generation, THG) ermittelt werden, wie es z.B. R.N. Prasad et al., Introduction to Nonlinear Optical Effects in Molecules and Polymers, John Wiley & Sons, New York, 1991 beschrieben ist.

Die Maxima der Absorptionsbanden der erfindungsgemäß zu verwendenden Matrixpolyacetylene liegen im allgemeinen zwischen 400 und 750 nm, vorzugsweise zwischen 400 und 700 nm, insbesondere zwischen 450 bis 700 nm, speziell zwischen 550 bis 700 nm. Die Lage der Absorptionsbanden läßt sich durch die (mittlere) Länge der Polyacetylerketten steuern; die Kettenlänge kann durch die Wahl der Polymerisationskatalysatoren und durch die Polymerisationstemperatur maßgeschneidert werden: Die nachfolgend beschriebenen bevorzugten Katalysatoren begünstigen die Entstehung von Matrixpolyacetylenen mit einer Absorption zwischen 550 und 700 nm. Durch eine Erhöhung von Reaktionstemperatur kann man mit den gleichen Katalysatoren Matrixpolyacerylene erhalten, die bei niedrigeren Wellerlängen absorbieren.

Bevorzugte Polymerisationskatalysatoren, die die Entstehung von Matrixpolyacerylenen mit Absorptionsmaxima im längerwelligen Bereich begünstigen, sind Nickelkatalysatoren, erhältlich durch Umsetzung einer Nickel-(O)-Verbindung oder einer Verbindung, die in situ in einer Nickel-(O)-Verbindung übergeführt werden kann, mit Phosphorverbindungen der Formeln

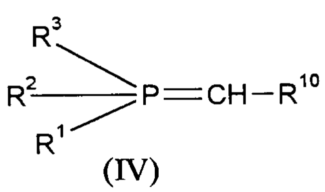

(IV)

und

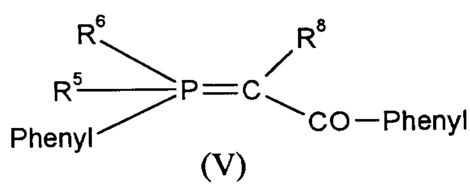

(V)

worin

$R^1$, $R^2$ und $R^3$ unabhängig voneinander $C_1$-$C_8$-Alkyl, Phenyl oder Benzyl bedeuten,

$R^5$, $R^6$ und $R^8$ unabhängig voneinander $C_1$-$C_8$-Alkyl oder Phenyl bedeuten, wobei $R^8$ zusätzlich Wasserstoff oder Acyl bedeuten kann und

$R^{10}$ für Wasserstoff, $C_1$-$C_8$-Alkyl oder Phenyl steht,

oder durch Umsetzung einer Nickel(0)-Verbindung oder einer Verbindung, die in situ in eine Nickel(0)-Verbindung übergeführt werden kann, mit einem Addukt oder einem Gemisch aus p-Benzochinon und einem Phosphin der Formel

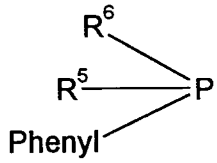

(VI),

in der $R^5$ und $R^6$ die genannten Bedeutungen haben und einer Verbindung der Formel (IV).

Besonders bevorzugte Polymerisationskatalysatoren sind Nickel-Katalysatoren, erhältlich durch Umsetzung einer Nickel(0)-Verbindung oder einer Verbindung, die in situ in einer Nickel(0)-Verbindung übergeführt werden kann, mit Verbindungen der Formeln

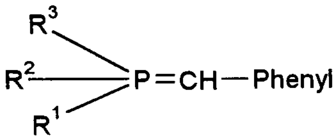

(VII)

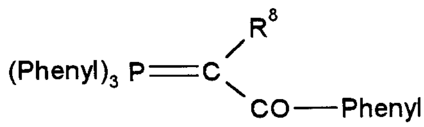

(VIII)

worin
$R^1$, $R^2$, $R^3$ und $R^8$ die oben genannten Bedeutungen haben und Nickel-Katalysatoren, erhältlich durch Umsetzung einer Nickel(0)-Verbindung, die in situ in eine Nickel(0)-Verbindung) übergeführt werden kann, mit einem Addukt oder Gemisch aus p-Benzochinon und Triphenylphosphin und einer Verbindung der Formel (VII).

Zur Herstellung des Katalysators können pro Mol Nickel(0)-Verbindung 1 - 4 Mol der Verbindung der Formel (IV) bzw. (VII) und 1 - 4 Mol der Verbindung der Formel (V) bzw. (VIII), bevorzugt pro Mol der Nickel(0)-Verbindung etwa 1 Mol der Verbindung der Formel (IV) bzw. (VII) und etwa 1 Mol der Verbindung der Formel (V) bzw. (VIII) eingesetzt werden. Gleiche molare Verhältnisse gelten, wenn anstelle einer Verbindung der Formel (V) bzw. (VIII) ein p-Benzochinon/Phosphin-Addukt oder -Gemisch der beschriebenen Art tritt.

Für die jeweils gewünschte Anwendung legt man vorzugsweise die Absorption des Matrixpolyacetylens so, daß es im Wellenlängenbereich der verwendeten Lichtquelle nicht absorbiert. Bei Bauelementen für die Telekommunikation betrifft dies üblicherweise Wellenlängen von 1,3 bis 1,9 µm. Eine andere gebräuchliche Laser-Wellenlänge liegt bei 1 064 um.

Solche erfindungsgemäß zu verwendende Matrixpolyacetylene, deren Polyacetylenketten überwiegend parallel zueinander liegen, weisen besonders gute NLO-Eigenschaften auf. Diese Parallelorientierung läßt sich beispielsweise durch Verstrecken erzielen.

Die erfindungsgemäß zu verwendenden Matrixpolyacetylene lassen sich zu Bauelementen verarbeiten, die beispielsweise in optischen Schaltern, Verstärkern, Frequenzmischern, Modulatoren für Phase und Intensität und in steuerbaren Filtern Verwendung finden können.

## Beispiele

### Beispiel 1

Matrixpolyacetylen (MATPAC)-Herstellung

In einem ausgeheizten 250 ml Dreihalskolben (mit Innenthermometer, Gaszuführung, Einleitungsrohr, Magnetrührer) wurden unter Argon-Schutzgas 235,5 g N-Methylpyrrolidon (NMP), welches über Calciumhydrid getrocknet und frisch destilliert worden war, vorgelegt.

Unter Rühren wurden 2,5 g Polyvinylalkohol zugegeben und während etwa 20 Minuten bei 110°C (innen) gelöst, die Lösung auf 50°C abgekühlt und 12,5 g über Calciumhydrid getrocknetes und destilliertes Dimethylsulfoxid zupipettiert. Bei 40°C wurden 0,25 mmol Katalysator [NiPh($Ph_2$PCHCPhO)(i-$Pr_3$PCHPh)] in 2 ml NMP injiziert, 1 Minute gerührt und anschließend 5 Minuten Acetylen eingeleitet. Anschließend wurde 5 Minuten Argon durch die MATPAC-Lösung geleitet, um nichtumgesetztes Acetylen zu verdrängen. Es wurde nochmals auf 110°C erhitzt und 10 Minuten gerührt und auf Raumtemperatur abgekühlt. Der gesamte schwarzblaue Reaktionsansatz wurde mit NMP auf 1 l verdünnt.

Aliquote Teile der klaren tiefdunkelblauen Lösung wurden weiterverdünnt, um UV-vis-spektroskopisch die PAC-Konzentration zu ermitteln. Bei 0,1 g PVA/l war die Extinktion 2,45 im Absorptionsmaximum bei 650 nm. Mit einem Extinktionskoeffizienten für Polyacetylen von 108 $lg^{-1}cm^{-1}$ errechnet sich ein Gehalt von 18,7 Gew.-% PAC im MATPAC.

Das gelöste MATPAC wurde unter Argon mit 2 l Methanol ausgefällt, mittels einer D-3 Schlenkfritte durch Filtration isoliert, 3 mal mit 100 ml Methanol und 3 mal mit 100 ml Diethylether gewaschen und im Vakuum bis zur Gewichtskonstanz getrocknet.

### Beispiel 2

Proben-Herstellung und Messung der NLO-Eigenschaft von MATPAC in Lösung

2 g des MATPAC-Polymers aus Beispiel 1 wurden unter Argon in 60 ml trockenem NMP während ca. 2 Stunden bei 110°C gelöst, filtriert und durch NMP-Zugabe eine Lösung hergestellt, die 1 g PAC pro Liter enthielt. Die feinfiltrierte Lösung (HV Millex 0,45 µm) wurde in 2 mm Küvetten für NLO-Messungen verwendet.

Die Suszeptibilitat 3. Ordnung $\chi^{(3)}$ wurde nach der DFWM-Methode ermittelt. Hierfür wurde ein OPC-Interferometer verwendet. Die Intensität der OPC (optical phase conjugate)-Welle, welche in einem Medium durch entartete 4-Wellen-Mischung (degenerate four wave mixing: DFWM) erzeugt wird, ist proportional der Suszeptibilität 3. Ordnung. Als Lichtquelle wurde ein Laser Quantel Nd: YAG YG-501: 10 Hz, 1064 nm, 200 ps Pulsdauer, 7 mJ verwendet.

Die Lichtabsorption bei 1064 um wurde durch NIR-Spektroskopie zu 0,06 ermittelt. Nach Korrektur um den $\chi^{(3)}$-Beitrag des Lösungsmittels besaß das Matrixpolyacetylen selbst bei dieser hohen Verdünnung (1 g PAC/l) noch einen $\chi^{(3)}$-Wert von $2{,}1 \cdot 10^{-13}$ esu.

## Patentansprüche

1. Verwendung von Matrixpolyacetylenen in Bauelementen, bei deren Funktion die nicht-linear optischen (chi$^{(3)}$)-Eigenschaften dieser Matrixpolyacetylene zum Tragen kommen.

2. Verwendung nach Anspruch 1, wobei die Matrixpolyacetylene eine maximale Absorption zwischen 400 und 750 nm besitzen.

3. Verwendung nach Anspruch 1, wobei die Matrixpolyacetylene eine maximale Absorption zwischen 400 und 700 nm besitzen.

4. Verwendung nach Anspruch 1, wobei die Matrixpolyacetylene chi$^{(3)}$-Werte von mehr als $10^{-13}$esu besitzen.

5. Verwendung nach Anspruch 1, wonach die Matrixpolyacetylene durch Polymerisation von Acetylen in Gegenwart von anderen Polymeren und Katalysatoren mit der Struktureinheit

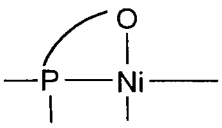

hergestellt worden sind.

**6.** Verwendung nach Anspruch 1, wobei die Matrix ein polares Polymer darstellt.

**7.** Verwendung nach Anspruch 1, wobei die Matrix überwiegend aus Polyvinylalkohol, Polyacrylnitril, Polyvinylpyrrolidon, Polyvinylcarbazol, Methylcellulose oder Polyvinylchlorid besteht.

Europäisches Patentamt

# EUROPÄISCHER RECHERCHENBERICHT

Nummer der Anmeldung
EP 96 10 0828

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| P,X<br>P,A | DE-A-44 00 143 (BASF)<br>* Seite 2, Zeile 16 - Zeile 32 *<br>* Seite 2, Zeile 66 - Seite 3, Zeile 16 *<br>* Seite 3, Zeile 37 - Zeile 39 *<br>* Ansprüche 1,2,5-7; Tabelle *<br>--- | 1,4<br>5-7 | G02F1/35<br>C08F291/00 |
| A | DE-A-42 28 852 (BASF)<br>* Seite 3, Zeile 39 - Zeile 40 *<br>* Seite 4, Zeile 55 - Seite 5, Zeile 18 *<br>* Beispiele *<br>--- | 1,4 | |
| A | US-A-5 212 585 (NING)<br>* Spalte 7, Zeile 60 - Spalte 8, Zeile 22 *<br>* Ansprüche 1,8,9 *<br>--- | 1 | |
| D,A | EP-A-0 210 498 (BAYER AG)<br>* Seite 1, Zeile 1 - Zeile 3 *<br>* Seite 1, Zeile 16 - Seite 2, Zeile 21 *<br>* Seite 7, Zeile 23 - Zeile 26 *<br>* Ansprüche 1,4-7,10 *<br>--- | 1,5-7 | **RECHERCHIERTE SACHGEBIETE (Int.Cl.6)** |
| D,A | EP-A-0 374 627 (BAYER AG)<br>* Seite 2, Zeile 20 - Zeile 25 *<br>* Seite 3, Zeile 9 - Zeile 38 *<br>* Beispiele 2-5 *<br>--- | 1-3,5-7 | G02F<br>C08F |
| A | EP-A-0 243 130 (THE BRITISH PETROLEUM COMPANY)<br>* das ganze Dokument *<br>----- | 1 | |

Der vorliegende Recherchenbericht wurde für alle Patentansprüche erstellt

| Recherchenort | Abschlußdatum der Recherche | Prüfer |
|---|---|---|
| DEN HAAG | 25.April 1996 | Puetz, C |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)